# EUROPÄISCHE PATENTSCHRIFT

(11) **EP 0 553 640 B1**
(45) Veröffentlichungstag und Bekanntmachung des Hinweises auf die Patenterteilung: **28.02.1996**
(21) Anmeldenummer: 93100379.2
(22) Anmeldetag: 13.01.1993
(51) Int. Cl.: B60H 1/00

(54) **Luftkanalanordnung für die Lüftung oder Klimatisierung eines Fahrzeuginnenraumes sowie Verfahren zur Herstellung einer Luftkanalanordnung**
Air duct arrangement for the ventilation or air conditioning of a motor vehicle interior compartment and its manufacturing process
Configuration des conduits d'air pour la ventilation ou climatisation de l'habitacle d'une voiture ainsi que son procédé de fabrication

(30) Priorität: 28.01.1992 DE 4202256
(43) Veröffentlichungstag der Anmeldung: 04.08.1993
(73) Patentinhaber: BENEFORM GmbH, D-31224 Peine (DE)
(72) Erfinder: Kiesel, Gerd H.,Dr. Ing., D-3008 Garbsen (DE); Blume, Wilfried, D-3000 Hannover 21 (DE); Meyer, Dieter, D-3002 Wedemark 1 (DE)
(74) Vertreter: Patentanwälte Thömen & Körner

(56) Entgegenhaltungen:
- DE-A- 2 235 148
- DE-A- 2 839 571
- DE-A- 3 915 196
- GB-A- 2 018 978
- PATENT ABSTRACTS OF JAPAN vol. 10, no. 200 (M-498)(2256) 12. Juli 1986 & JP-A-61 044 018 (NIPPON DENSO) 3. März 1986

## Beschreibung

Die Erfindung betrifft eine Luftkanalanordnung von der in GB-A-2 018 978 dargestellten Art nach dem Oberbegriff des Anspruchs 1. Sie betrifft außerdem ein Verfahren zur Herstellung dieser Luftkanalanordnung.

In großräumigen Fahrzeugen, wie Schiffen, Flugzeugen oder Bussen werden bereits Luftkanalanordnungen verwendet, über die Frischluft oder klimatisierte Luft zu den einzelnen Fahrgastplätzen gefördert wird. In den meisten Fällen befinden sich in der Deckenverkleidung über den Sitzen Austrittsöffnungen, zu denen flexible Schläuche von einer zentralen Lüftung oder einem Klimagerät geführt sind. Die Schläuche sind dabei nicht sichtbar hinter den Verkleidungen angeordnet.

Bei kleineren Fahrzeugen, insbesondere Personenkraftwagen befinden sich die Austrittsöffnungen für Luft oder klimatisierte Luft in der Armaturentafel. Die Luftkanäle können hier ebenfalls als Schläuche ausgebildet sein, die unsichtbar hinter dem Skelett der Armaturentafel angebracht sind oder auch als thermoplastische Formteile ausgeprägt sein, die mit anderen thermoplastischen Teilen des Skelettes der Armaturentafel reibverschweißt sind. Die Armaturentafel stellt allerdings kein Verkleidungselement sondern ein Funktionselement dar.

Um auch in kleinen Fahrzeugen, z. B. Kleinbussen, eine bessere Heranführung der Luft oder klimatisierten Luft zu den Sitzplätzen vornehmen zu können, wäre es wünschenswert, diese über Luftkanäle zu Öffnungen in der Verkleidung zu führen, wie dies von den vorgenannten großräumigen Fahrzeugen her bekannt ist. Hier besteht aber das Problem, daß im Hinblick auf einen möglichst großen Innenraum bei vergleichsweise geringen Außenabmessungen die Verkleidungselemente sehr eng an der Karosserie angebracht sind, wodurch der verbleibende Zwischenraum für einen flexiblen Schlauch als Luftkanal zu klein wird. Luftkanalanordnungen der eingangs genannten Art passen noch in den teilweise erweiterten Zwischenraum zwischen den Verkleidungselementen und der Karosserie hinein.

Der Erfindung liegt die Aufgabe zugrunde, eine Luftkanalanordnung zur Lüftung oder Klimatisierung eines Fahrzeuginnenraumes zu schaffen, bei der eine wirksame Belüftung erzielt wird, ohne daß der Innenraum durch zu große Abstände der Verkleidungselemente von der Fahrzeugkarosserie unerwünscht verkleinert wird.

Diese Aufgabe wird bei einer Luftkanalanordnung nach dem Oberbegriff des Anspruchs 1 durch die im kennzeichnenden Teil angegebenen Merkmale gelöst.

Bei der Erfindung werden mehrschichtige Verkleidungselemente zur Bildung von Luftkanälen mit ausgenutzt. Sie bilden hierbei die zum Fahrzeuginnenraum weisende Begrenzungswand der Luftkanäle, während die anderen Begrenzungswände durch ein thermoplastisches Formteil gebildet werden, das auf die Rückseite, also die der Dekorseite der Verkleidungselemente entgegengesetzte Seite aufgesetzt sind. Durch eine dauerelastische Verklebung der Wandteile wird erreicht, daß einerseits Fertigungstoleranzen ausgeglichen werden können und andererseits mechanische Veränderungen, wie sie durch Wärmeausdehnung oder Alterung entstehen, ebenfalls kompensiert werden.

Durch die erfindungsgemäße Ausgestaltung der Luftkanäle werden die Voraussetzungen geschaffen, daß ein sehr großer Querschnitt der Luftkanäle hergestellt werden kann, ohne daß ein zu großer Abstand der Verkleidungselemente von der Fahrzeugkarosserie eingehalten werden muß. Dieser große Querschnitt läßt sich nämlich dadurch erreichen, daß bei einem Abstand der Verkleidungselemente von der Karosseriewand, wie er bei bisherigen Fahrzeugen üblich ist, die Luftkanäle entsprechend breit ausgebildet werden.

Ferner lassen sich die Luftkanäle zusammen mit der Herstellung der Verkleidungselemente vorfertigen, so daß die Luftkanäle später beim Einhängen der Verkleidungselemente im Fahrzeuginnenraum bereits an den benötigten Orten vorhanden sind.

Vorzugsweise besteht das thermoplastische Formteil aus einem luft- und dampfundurchlässigen Material, z. B. aus Acryl-Butadien-Styrol (ABS) und das Verkleidungselement weist auf seiner Rückseite eine luft- und dampfundurchlässige Folie, z. B. aus Polyethylen (PE) auf. Entweder ist das Verkleidungselement mit dieser Folie zusätzlich beschichtet oder die Folie ist bereits integraler Bestandteil des Verkleidungselementes. Der die Wandteile zusammenfügende dauerelastische Kleber besteht aus einem luftdichten, rottfesten Material, vorzugsweise aus einem luftfeuchtigkeitsvernetzenden Polyurethan.

Durch diese Maßnahme wird einerseits sichergestellt, daß die gesamte geförderte Luft gezielt zu den Luftöffnungen gelangt, also keine Nebenluft an Stellen entweicht, wo sie für eine wirksame Belüftung des Innenraumes, insbesondere der Sitzbereiche, verlorengeht. Zum anderen wird verhindert, daß bei erheblichen Temperaturunterschieden zwischen der für die Belüftung oder Klimatisierung verwendeten Luft und den Verkleidungselementen bzw. dem thermoplastischen Formteil Dampfteilchen das Material durchdringen und sich als Schwitzwasser an der Karosserie oder den Verkleidungselementen niederschlagen können. Weiterhin wird auch verhindert, daß durch Eindringen derartiger Feuchtigkeit in die Verkleidungsteile Beschädigungen des Materials, Schimmelbildung, Farbveränderungen oder Geruchsbelästigungen entstehen.

Eine Weiterbildung sieht vor, daß das thermoplastische Formteil außen eine zusätzliche Dämmatte zur Schall- und Wärmedämmung trägt, die mit dem Formteil und dem Verkleidungselement verklebt ist, und daß eine Schall- und Wärmedämmschicht seitens des Verkleidungselementes durch einen aufgeschäumten Trägerkern im Inneren des mehrschichtigen Verkleidungselementes gebildet ist.

Diese Dämmung sorgt dafür, daß die durch die Luftkanalanordnung geförderte Luft ihre Temperatur bis zum Erreichen der Luftöffnungen beibehält und so eine wirksame Kühlung oder Erwärmung am Austrittsort erzielt. Ferner wird die Entstehung von Schwitzwasser, insbesondere an kalten Umgebungsteilen, wie dem Karosserieblech bei kühlen Außentemperaturen oder an der Außenfläche der Luftkanalanordnung bei warmen Außentemperaturen verhindert. Gleichzeitig sorgt eine Schalldämmung dafür, daß eventuell vorhandene Strömungsgeräusche im Inneren der Luftkanalanordnung nicht über die Karosserie oder die Verkleidung nach innen übertragen werden.

Vorzugsweise münden die Luftkanäle in Luftöffnungen, die im Verkleidungselement ausgespart sind.

Die Luft kann somit ohne zusätzliche Übergangsstücke zu den Luftöffnungen geführt werden, wodurch einmal der mechanische Aufwand verringert wird und zum anderen auch Strömungsgeräusche, wie sie bei Kontur- oder Querschnittsänderungen des Luftkanals auftreten können, vermieden werden.

Bei Vorhandensein mehrerer räumlich getrennter Luftöffnungen zweigen die Luftkanäle von einem gemeinsamen Sammelkanal zu Stichkanälen ab. Die Luftkanäle weisen einen Kanalquerschnitt auf, der bei den Stichkanälen etwa dem Mündungsquerschnitt der zugeordneten Luftöffnungen und bei den Sammelkanälen etwa der Summe der Mündungsquerschnitte der zugeordneten Luftöffnungen entspricht.

Hierdurch werden konstante Strömungs- und Druckverhältnisse im Luftkanal sichergestellt, wodurch sich die Luftmenge, die aus den einzelnen Luftöffnungen austritt, ebenfalls konstant halten läßt. Sind z. B. alle Luftöffnungen geöffnet, so werden auch alle gleichmäßig mit Luft versorgt, d. h. eine Bevorzugung der am Anfang der Luftkanalanordnung liegenden Luftöffnungen findet nicht statt.

Weiterhin ist vorgesehen, daß in den Sammelkanälen vor den Abzweigungen der Stichkanäle Luftleitwände angeordnet sind, die aus dem thermoplastischen Formteil ausgeformt sind.

Durch diese Ausgestaltung wird die gleichmäßige Luftverteilung noch weiter verbessert. Die Luftleitwände sorgen dafür, daß die Luftmenge schon frühzeitig vor der Abzweigung entsprechend dem Kanalquerschnitt aufgeteilt wird. Die Strömung wird dadurch beruhigt und geräuscherzeugende Turbulenzen werden vermieden.

Außerdem ist vorgesehen, daß die Luftkanäle flache, rechteckige Kanalquerschnitte konstanter Tiefe aufweisen. Ihre Breite ist nach der Anzahl der zugeordneten Luftöffnungen abgestuft.

Mit dieser Maßnahme wird der zur Verfügung stehende Zwischenraum zwischen dem Verkleidungselement und der Karosserie optimal für die Unterbringung von Luftkanälen ausgenutzt. Der notwendige Kanalquerschnitt wird also über die Breite des Profils bei vorgegebener Tiefe hergestellt.

Gemäß einer ersten Alternative weist das thermoplastische Formteil ein U-förmiges Profil auf, das durch das Verkleidungselement geschlossen ist.

Bei dieser Ausgestaltung kann das Verkleidungselement also eine ebene Fläche bilden, wodurch in den Fahrzeuginnenraum vorstehende Teile vermieden werden. Andererseits wird bei dieser Ausgestaltung aber ein entsprechend U-förmig geformtes Formteil mit Flanschen benötigt.

Eine andere Alternative sieht vor, daß das Verkleidungselement im Bereich der Luftkanäle U-förmig ausgeformt und durch eine planes thermoplastisches Formteil geschlossen ist.

Hierdurch wäre es möglich, das Verkleidungselement teilweise unmittelbar, d. h. ohne Abstand, an der Karosserie anzubringen und nur im Bereich der Luftkanäle eine entsprechende in den Fahrzeuginnenraum weisende Wölbung vorzusehen. Die Ausgestaltung des Formteils läßt sich dadurch wesentlich vereinfachen.

Bei einer praktischen Ausgestaltung sind die Luftöffnungen in den Wänden ausgeformter Sicken oder Mulden des Verkleidungselementes angeordnet und mit verschließbaren Düsen versehen.

Dadurch läßt sich erreichen, daß durch die Neigung der Wandbereiche der Sicken oder Mulden bereits die Richtung vorgegeben wird, in die der aus den Luftkanälen ausströmende Luftstrom in den Fahrzeuginnenraum übertritt. Dies erübrigt eine spezielle plastische Ausgestaltung der Düsen und vermindert so die Unfallgefahr durch aus dem Verkleidungselement herausragender Teile.

Das thermoplastische Formteil kann aus mehreren zusammengesetzten Einzelteilen bestehen, die an muffenartigen Ausformungen untereinander verbunden sind.

Auf diese Weise können Standardteile für unterschiedliche Fahrzeugtypen verwendet werden. Dies trägt erheblich zur Einsparung von Werkzeugkosten bei und ermöglicht so, die erfindungsgemäße Luftkanalanordnung in wirtschaftlicher Weise auch bei Fahrzeugen einzusetzen, die in verhältnismäßig geringen Stückzahlen produziert werden.

Bei einer Weiterbildung sind zusätzlich zur dauerelastischen Klebenaht Heftpunkte aus einem schnell abbindenden Kleber vorgesehen.

Dies ermöglicht eine Erhöhung der Fertigungsgenauigkeit und damit im späteren eingebauten Zustand auch eine höhere Zuverlässigkeit gegen Undichtigkeiten, Materialermüdungen und Brüche oder Klappergeräusche. Dabei wird durch die Heftpunkte erreicht, daß die beim Zusammensetzen von Verkleidungsteil und Formteil noch frische Klebeschicht abbinden kann, ohne daß es während dieses Prozesses zu einer ungewünschten Verschiebung der beiden Teile kommen kann.

Eine praktische Ausführung sieht vor, daß die thermoplastischen Formteile als Abstandshalter für Schnappbefestigungen mit der Fahrzeugkarosserie dienen.

Dadurch lassen sich einmal zusätzliche Abstandshalter einsparen, zum anderen erfolgt die Befestigung des Verkleidungselementes an den Teilen, die die größte Materialmasse besitzen. Dadurch lassen sich Schwingungen und in dessen Folge auftretende Materialermüdungen und Brüche zuverlässig vermeiden. Im übrigen kommt auch die zusätzliche Dämmschicht zur Anlage an die Karosserie, was mit dazu beiträgt, Karosserieschwingungen und Dröhnen zu unterbinden.

Die Erfindung betrifft ferner ein Verfahren zur Herstellung einer Luftkanalanordnung nach Anspruch 14.

Diesbezüglich liegt ihr die Aufgabe zugrunde, ein Verfahren zu schaffen, das eine luftdichte, elastische Verbindung zwischen zwei zusammenzufügenden Teilen bei kurzen Herstellungstaktzeiten ermöglicht.

Diese Aufgabe wird bei einem Verfahren nach dem Oberbegriff des Anspruchs 14 durch die im kennzeichnenden Teil angegebenen Merkmale gelöst.

Durch den langzeitoffenen, dauerelastischen Kleber lassen sich die Teile zunächst grob vorpositioniert aufeinanderlegen und anschließend feinpositionieren, wobei die langzeitoffene Eigenschaft des Klebers ausgenutzt wird, noch eine geringfügige Verschiebung der miteinander zu verbindenden Teile zu ermöglichen. Nach dem Abbinden behält dieser Kleber noch dauerelastische Eigenschaften, wodurch Toleranzen und geringfügige Relativbewegungen infolge von Wärmedehnung oder mechanischen Beanspruchungen zwischen den zusammengefügten Teilen ausgeglichen werden können. Durch die Fixierung wird dann erreicht, daß die endpositionierten Teile während der anschließenden Abbindezeit des dauerelastischen Klebers ihre relativen Positionen beibehalten können.

Eine Weiterbildung sieht vor, daß das Formteil am Verkleidungselement an Heftpunkten fixiert wird, die längs des Verbindungsflansches angeordnet sind.

Diese Heftpunkte sorgen dafür, daß die Klebeflächen des dauerelastischen Klebers auch bei einer anschließenden Zwischenlagerung zum Abbinden in ihrer endgültigen Position festgehalten werden.

Vorzugsweise werden die Heftpunkte durch einen kurzzeitoffenen Kleber gebildet, der an markierten Orten des Verbindungsflansches während einer vorübergehenden mechanischen Fixierung über das Verkleidungselement und die Außenfläche des Verbindungsflansches aufgetragen wird.

Nach dem Zusammenfügen und Endpositionieren des Formteils mit dem Verkleidungselement muß also nur noch abgewartet werden, bis der kurzzeitoffene Kleber abgebunden ist. Sodann kann die vorübergehende mechanische Fixierung aufgehoben werden und die zusammengefügten Teile können aushärten. Die zur mechanischen Fixierung dienende Vorrichtung steht sodann für den Zusammenbau eines weiteren Verkleidungselementes mit einem Formteil zur Verfügung.

Weiterbildungen und vorteilhafte Ausgestaltungen der Luftkanalanordnung sowie des Verfahrens zu seiner Herstellung ergeben sich aus den Ansprüchen, der weiteren Beschreibung und der Zeichnung, die ein Ausführungsbeispiel veranschaulicht. In der Zeichnung zeigen:
- Fig. 1: einen Querschnitt durch eine Luftkanalanordnung,
- Fig. 2: einen Detailquerschnitt aus Fig. 1 und
- Fig. 3: eine Draufsicht auf die Rückseite eines Verkleidungselementes im Bereich einer Luftkanalanordnung.

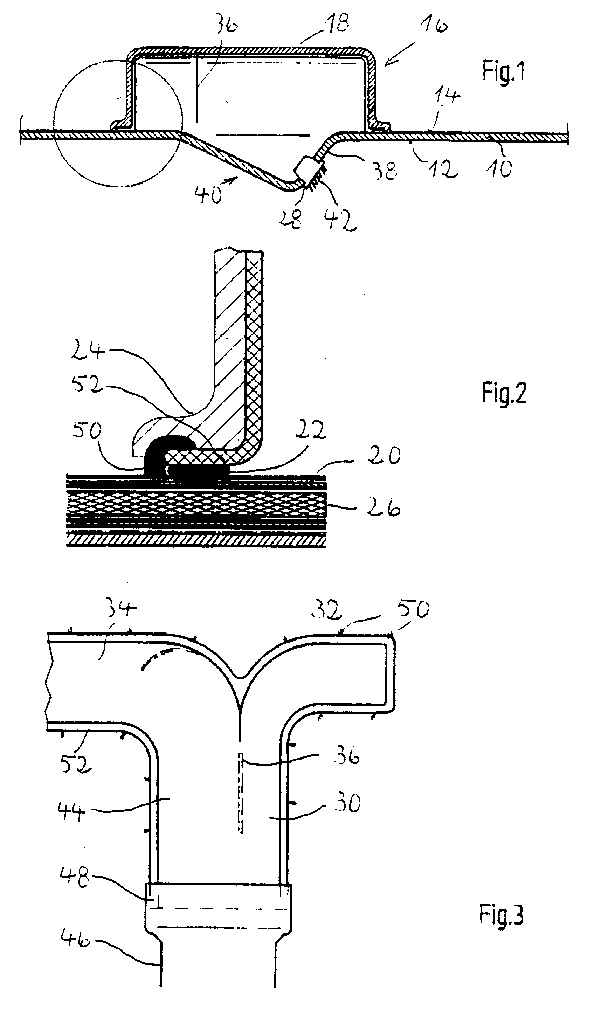

In Fig. 1 ist ein Querschnitt durch eine Luftkanalanordnung dargestellt, die durch Verkleben eines Verkleidungselementes 10 mit einem thermoplastischen Formteil 18 gebildet ist. Das Verkleidungselement 10 befindet sich in der Nähe einer nicht dargestellten Karosseriewand und weist mit einer Dekorseite 12 in den Fahrzeuginnenraum. Auf seiner Rückseite 14 trägt es das Formteil 18, das als U-förmiges Profil ausgebildet ist.

Der so gebildete Luftkanal 16 führt Frischluft oder klimatisierte Luft von einem Lüfter oder einem Klimagerät zu einer oder mehreren Luftöffnungen 28, die im Formteil 10 ausgespart sind.

Das thermoplastische Formteil 18 besteht aus einem luft- und dampfundurchlässigen Material, vorzugsweise aus Acryl-Butadien-Styrol (ABS). Das Verkleidungselement 10 ist auf seiner Rückseite 14 mit einer luft- und dampfundurchlässigen Folie 20, vorzugsweise aus Polyethylen (PE) beschichtet, wie aus der Detaildarstellung in Fig. 2 hervorgeht. Zwischen einem Flansch 52 des Formteils 18 und dem Verkleidungselement 10 befindet sich eine Klebeschicht 22 aus einem dauerelastischen Kleber. Dieser besteht aus einem luftdichten, rottfesten Material, vorzugsweise einem luftfeuchtigkeitsvernetzenden Polyurethan.

Zusätzlich trägt das thermoplastische Formteil 18 außen eine Dämmatte 24 zur Schall- und Wärmedämmung. Auch diese ist mit dem Formteil 18 und dem Verkleidungselement 10 verklebt. Auf der Seite des Verkleidungselementes 10 ist eine entsprechende zusätzliche Dämmatte nicht nötig. Hier übernimmt ein aufgeschäumter Trägerkern 26 im Inneren des Verkleidungselementes 10 die Funktion der Schall- und Wärmedämmung. Außerdem ist in Fig. 2 noch ein Heftpunkt 50 erkennbar, der durch einen kurzzeitoffenen Kleber gebildet ist. Von diesen Heftpunkten 50 sind, wie in Verbindung mit Fig. 3 erkennbar, mehrere längs des Verbindungsflansches 52 angeordnet. Sie dienen dazu, nach einer Fixierung des thermoplastischen Formteils 18 mit dem Verkleidungsteil 10 deren gegenseitige Position zu fixieren, bis der dauerelastische Kleber abgebunden ist.

Sollen mit der Luftkanalanordnung mehrere Luftöffnungen 28 versorgt werden, die auch räumlich getrennt voneinander liegen, so kann die Luft zunächst über einen gemeinsamen Sammelkanal 30 zugeführt werden, der dann zu Stichkanälen 32 und 34 abzweigt, wie es in Fig. 3 angedeutet ist. Dabei weisen die Luftkanäle 16 jeweils einen Kanalquerschnitt auf, der bei den Stichkanälen 32 und 34 etwa dem Mündungsquerschnitt der zugeordneten Luftöffnungen 28 entspricht und bei dem Sammelkanal 30 etwa der Summe der Mündungsquerschnitte entspricht. Wie weiterhin in Fig. 1 in Verbindung mit Fig. 3 erkennbar ist, sind in den Sammelkanälen 30 vor den Abzweigungen der Stichkanäle 32 und 34 Luftleitwände 36 angeordnet. Diese sind aus dem thermoplastischen Formteil 18 ausgeformt. Mit Hilfe der Luftleitwände 36 gelingt es, den Luftstrom bereits vor den Abzweigungen so aufzuteilen, daß er ohne Turbulenzen in die Stichkanäle 32 und 34 übertritt und gleiche Druckverhältnisse in allen Stichkanälen entstehen. Dadurch wird eine gleichmäßige Versorgung aller Luftöffnungen 28 und auch eine gleichmäßige Austrittsgeschwindigkeit an allen Austrittsdüsen gewährleistet.

In der Regel weisen die Luftkanäle 16 flache, rechteckige Kanalquerschnitte konstanter Tiefe auf. Ihre Breite richtet sich nach der Zahl der zugeordneten Luftöffnungen 28, so daß also der Querschnitt jeweils proportional zur geförderten Luftmenge ist.

Wie in Fig. 1 dargestellt, sind die Luftöffnungen 28 vorzugsweise in Wänden 38 ausgeformter Sicken 40 oder auch Mulden des Verkleidungselementes 10 angeordnet. Diese Luftöffnungen 28 sind mit verschließbaren Austrittsdüsen 42 versehen. Durch diese Anordnung läßt sich in einfacher Weise eine Vorausrichtung des austretenden Luftstromes erreichen.

Wie aus Fig. 3 hervorgeht, können die thermoplastischen Formteile 18 auch aus mehreren zusammengesetzten Einzelteilen 44 und 46 bestehen. Diese sind bei einer solchen Variante an muffenartigen Ausformungen 48 untereinander verbunden. Hiermit ist es möglich, für die Ausstattung unterschiedlicher Fahrzeugtypen einheitliche Grundelemente zu verwenden, wodurch Werkzeugkosten eingespart werden können.

Bei der Herstellung der Luftkanalanordnung wird wie folgt vorgegangen. Zunächst werden das Verkleidungselement 10 und das thermoplastische Formteil 18 getrennt hergestellt. Dabei besteht das Verkleidungselement 10 aus einem mehrschichtigen Ausgangselement, das thermisch verformt wird. Der Aufbau eines derartigen Verkleidungselementes ist z. B. in der DE-OS 36 20 726 beschrieben. Für die Montage wird nun das Verkleidungselement 10 mit seiner Dekorseite 12 nach unten weisend auf eine Form aufgelegt und das Formteil 18, das an seinen Flanschen 52 zuvor mit einer Klebeschicht durch Bestreichen mit einem dauerelastischen Kleber versehen wurde, vorpositioniert auf die Rückseite 14 des Verkleidungselementes 10 aufgelegt. Dieser Vorgang kann von Hand erfolgen und mit einer Lehre grob kontrolliert werden.

Anschließend läßt sich mit Hilfe eines Präzisionswerkzeuges eine Endpositionierung des thermoplastischen Formteils 18 vornehmen, wobei die Teile in allen drei Achsen noch einmal geringfügigen Verschiebungen unterworfen werden. Durch die Eigenschaften des langzeitoffenen Klebers ist diese Korrektur auch dann noch möglich, wenn die Teile bereits miteinander verbunden sind.

Während der mechanischen Fixierung wird anschließend an vorbestimmten Heftpunkten, die z. B. an den Andruckflächen einer Fixierlehre ausgespart sind, ein kurzzeitoffener Kleber, z. B. ein Heißkleber aufgebracht, der nunmehr eine Klebefixierung bewirkt. Die miteinander verbundenen Teile können dann aus der Form entnommen werden. Es besteht nun keine Gefahr mehr, daß während der nachfolgenden, etwa eintägigen Abbindezeit des langzeitoffenen Klebers eine Relativbewegung zwischen dem Verkleidungselement und dem Formteil eintreten kann.

Ehe die Luftkanalanordnung nun zum Abbinden des langzeitoffenen Klebers unter Einwirkung der Luftfeuchtigkeit gelagert wird, wird noch eine Dämmatte 24 auf das thermoplastische Formteil 18 aufgeklebt, das die Flansche 52 übergreift und auch mit dem Verkleidungselement 10 Kontakt hält. Als Kleber dient in diesem Fall ein Kontaktkleber.

## Patentansprüche

1. Luftkanalanordnung für die Lüftung oder Klimatisierung eines Fahrzeuginnenraumes, der mit mehrschichtigen, geformten Verkleidungselementen (10) ausgestattet ist, wobei eine Dekorseite (12) der Verkleidungselemente (10) zum Fahrzeuginnenraum und eine Befestigungselemente tragende Rückseite (14) zur Karosseriewand weist und die Luftkanäle (16) an den Verkleidungselementen, vorzugsweise des Fahrzeughimmels, angeordnet und vollständig durch zwei miteinander über einen Verbindungsflansch (52) verbundene Wandteile begrenzt sind, von denen jeweils das eine Wandteil unmittelbar durch das Verkleidungselement (10) selbst und das andere Wandteil durch ein auf der Rückseite (14) des Verkleidungselementes (10) angeordnetes separates Formteil (18) gebildet ist, dadurch gekennzeichnet, daß das Verkleidungselement (10) mehrschichtig ausgebildet und mit dem aus thermoplastischen Material bestehenden Formteil (18) dauerelastisch verklebt ist und die so vorgefertigte Luftkanalanordnung an einer Karosseriewand im Fahrzeuginnenraum befestigbar ist.

2. Luftkanalanordnung nach Anspruch 1, dadurch gekennzeichnet, daß das thermoplastische Formteil (18) aus einem luft- und dampfundurchlässigen Material, vorzugsweise aus Acryl-Butadien-Styrol (ABS), besteht, daß das Verkleidungselement (10) auf der Rückseite (14) mit einer luft- und dampfundurchlässigen Folie (20), vorzugsweise aus Polyethylen (PE), beschichtet ist oder wenigstens im Luftkanalbereich eine zusätzliche luft- und dampfundurchlässigen Folie trägt und daß eine die Wandteile zusammenfügende dauerelastische Klebeschicht (22) aus einem luftdichten, rottfesten Material, vorzugsweise einem luftfeuchtigkeits-vernetzenden Polyurethan, besteht.

3. Luftkanalanordnung nach Anspruch 1 oder 2, dadurch gekennzeichnet, daß das thermoplastische Formteil (18) außen eine zusatzliche Dämmatte (24) zur Schall- und Wärmedämmung trägt, die mit dem Formteil (18) und dem Verkleidungselement (10) verklebt ist und daß eine Schall- und Wärmedämmschicht seitens des Verkleidungselementes (10) durch einen aufgeschäumten Trägerkern (26) im Inneren des mehrschichtigen Verkleidungselementes gebildet ist.

4. Luftkanalanordnung nach einem oder mehreren der Ansprüche 1 bis 3, dadurch gekennzeichnet, daß die Luftkanäle in Luftöffnungen (28) münden, die im Verkleidungselement (10) ausgespart sind.

5. Luftkanalanordnung nach Anspruch 4, dadurch gekennzeichnet, daß bei Vorhandensein mehrerer räumlich getrennter Luftöffnungen (28) die Luftkanäle (16) von einem gemeinsamen Sammelkanal (30) zu Stichkanälen (32, 34) abzweigen und daß die Luftkanäle (16) jeweils einen Kanalquerschnitt aufweisen, der bei den Stichkanälen (32, 34) etwa dem Mündungsquerschnitt der zugeordneten Luftöffnung (28) entspricht und bei den Sammelkanälen (30) etwa der Summe der Mündungsquerschnitte der zugeordneten Luftöffnungen (28) entspricht.

6. Luftkanalanordnung nach Anspruch 5, dadurch gekennzeichnet, daß in den Sammelkanälen (30) vor den Abzweigungen der Stichkanäle (32, 34) Luftleitwände (36) angeordnet sind, die aus dem thermoplastischen Formteil (18) ausgeformt sind.

7. Luftkanalanordnung nach Anspruch 5 oder 6, dadurch gekennzeichnet, daß die Luftkanäle (16) flache, rechteckige Kanalquerschnitte konstanter Tiefe aufweisen und daß ihre Breite nach der Anzahl der zugeordneten Luftöffnungen (28) abgestuft ist.

8. Luftkanalanordnung nach Anspruch 7, dadurch gekennzeichnet, daß das thermoplastische Formteil (18) ein U-förmiges Profil aufweist, das durch das Verkleidungselement (10) geschlossen ist.

9. Luftkanalanordnung nach Anspruch 7, dadurch gekennzeichnet, daß das Verkleidungselement (10) im Bereich der Luftkanäle (16) U-förmig ausgeformt und durch ein planes thermoplastische Formteil (18) geschlossen ist.

10. Luftkanalanordnung nach einem oder mehreren der Ansprüche 4 bis 9, dadurch gekennzeichnet, daß die Luftöffnungen (28) in den Wänden (38) ausgeformter Sicken (40) oder Mulden des Verkleidungselementes (10) angeordnet und mit verschließbaren Austrittsdüsen (42) versehen sind.

11. Luftkanalanordnung nach einem oder mehreren der Ansprüche 1 bis 10, dadurch gekennzeichnet, daß das thermoplastische Formteil (18) aus mehreren zusammengesetzten Einzelteilen (44, 46) besteht, die an muffenartigen Ausformungen (48) untereinander verbunden sind.

12. Luftkanalanordnung nach einem oder mehreren der Ansprüche 1 bis 11, dadurch gekennzeichnet, daß zusätzlich zur dauerelastischen Klebeschicht (22) Heftpunkte (50) aus einem schnell abbindenden Kleber vorgesehen sind.

13. Luftkanalanordnung nach einem oder mehreren der Ansprüche 1 bis 12, dadurch gekennzeichnet, daß die thermoplastischen Formteile (18) als Abstandshalter für Schnappbefestigungen mit der Fahrzeugkarosserie dienen.

14. Verfahren zur Herstellung einer Luftkanalanordnung nach Anspruch 1, dadurch gekennzeichnet, daß ein thermoplastisches Formteil an seinem Verbindungsflansch mit einem langzeitoffenen, dauerelastischen Kleber bestrichen wird, daß anschließend das Formteil auf die Rückseite eines mehrschichtigen Verkleidungselementes vorpositioniert aufgelegt wird und in drei Achsen endpositioniert und fixiert wird.

15. Verfahren nach Anspruch 14, dadurch gekennzeichnet, daß das Formteil am Verkleidungselement an Heftpunkten fixiert wird, die längs des Verbindungsflansches angeordnet sind.

16. Verfahren nach Anspruch 15, dadurch gekennzeichnet, daß die Heftpunkte durch einen kurzzeitoffenen Kleber gebildet werden, der an markierten Orten des Verbindungsflansches während einer vorübergehenden mechanischen Fixierung über das Verkleidungselement und die Außenfläche des Verbindungsflansches aufgetragen wird.

## Claims

1. Air duct arrangement for the ventilation or air conditioning of a vehicle interior compartment, which is equipped with multilayer, premoulded lining elements (10), wherein a decorative side (12) of the lining elements (10) faces towards the vehicle interior compartment and a rear side (14) carrying fixing elements faces towards the bodywork wall and the air ducts (16) are disposed on the lining elements, preferably of the headliner, and are bounded completely by two wall components, connected to each other by a connecting flange (52), of which the one wall component is formed directly by the lining element (10) itself and the other wall component by a separate moulding (18), disposed on the rear face (14) of the lining element (10), characterized in that the lining element (10) is of multilayer construction and is bonded permanently elastically to the moulding (18) consisting of thermoplastics material, and the thus prefabricated air duct arrangement can be fixed to a bodywork wall in the vehicle interior compartment.

2. Air duct arrangement according to claim 1, characterized in that the thermoplastics moulding (18) consists of a material impermeable to air and vapour, preferably of acrylonitrile-butadiene-styrene (ABS), that the lining element (10) is coated on the rear face (14) with an air-impermeable and vapour-impermeable foil (20), preferably of polyethylene (PE) or carries, at least in the air duct region, an additional air-impermeable and vapour-impermeable foil, and that an adhesive coating (22), permanently elastically connecting together the wall components, consists of an airtight, non-decaying material, preferably a polyurethane that cross-links with atmospheric humidity.

3. Air duct arrangement according to claim 1 or 2, characterized in that the thermoplastics moulding (18) carries, externally, an additional insulating mat (24) for acoustic and thermal insulation, which is glued to the moulding (18) and the lining element (10), and that an acoustically and thermally insulating layer at the lining element (10) is formed by a foamed support core (26) in the interior of the multilayer lining element.

4. Air duct arrangement according to one or more of claims 1 to 3, characterized in that the air ducts lead into air openings (28) which are formed in the lining element (10).

5. Air duct arrangement according to claim 4, characterized in that, when several spatially separated air openings (28) are present, the air ducts (16) depart from a common header duct (30) to cross-ducts (32, 34), and that the air ducts (16) each have a duct cross-section which, in the case of the cross-ducts (32, 34), is approximately equal to the outlet cross-section of the associated air opening (28) and, in the case of the header ducts (30), is approximately equal to the sum of the outlet cross-sections of the associated air openings (28).

6. Air duct arrangement according to claim 5, characterized in that, in the header ducts (30) upstream of the branches to the cross-ducts (32, 34), air guide walls (36) are disposed, which are integrally moulded from the thermoplastics moulding (18).

7. Air duct arrangement according to claim 5 or 6, characterized in that the air ducts (16) have flat, rectangular duct cross-sections of constant depth and that their width is stepped down according to the number of the associated air openings (28).

8. Air duct arrangement according to claim 7, characterized in that the thermoplastics moulding (18) has a U-shaped profile, which is closed by the lining element (10).

9. Air duct arrangement according to claim 7, characterized in that the lining element (10) is integrally moulded U-shaped in the region of the air ducts (16) and is closed by a flat thermoplastics moulding (18).

10. Air duct arrangement according to one or more of claims 4 to 9, characterized in that the air openings (28) are disposed in the walls (38) of integrally moulded corrugations (40) or depressions of the lining element (10) and are provided with closable outlet nozzles (42).

11. Air duct arrangement according to one or more of claims 1 to 10, characterized in that the thermoplastics moulding (18) consists of several assembled individual parts (44, 46), which are connected to one another at sleeve-shaped integral mouldings (48).

12. Air duct arrangement according to one or more of claims 1 to 11, characterized in that, additionally to the permanently elastic adhesive coating (22), stitching points (50) of a quick-setting adhesive are provided.

13. Air duct arrangement according to one or more of claims 1 to 12, characterized in that the thermoplastics mouldings (18) serve as spacers for snap-fixings to the vehicle bodywork.

14. Process for the production of an air duct arrangement according to claim 1, characterized in that a thermoplastics moulding is coated at its connecting flange with a long-term open permanently elastic adhesive, that then the moulding is laid temporarily positioned on the rear face of a multilayer lining element and is finally positioned and fixed in three axes.

15. Process according to claim 14, characterized in that the moulding is fixed to the lining element at stitching points which are disposed along the connecting flange.

16. Process according to claim 15, characterized in that the stitching points are formed by a temporarily open adhesive, which is applied at marked positions of the connecting flange during a temporary mechanical fixing by the lining element and the outer surface of the connecting flange.

## Revendications

1. Structure de conduits d'air pour l'aération ou la climatisation de l'espace intérieur d'un véhicule, qui est réalisée avec des éléments de garniture multicouche (10) mis en forme, une face décor (12) de l'élément de garniture (10) étant tournée vers l'espace intérieur du véhicule et une face arrière (14), qui supporte un élément de fixation, tournée vers la paroi de la carrosserie, et les conduits d'air (16) étant disposés sur les éléments de garniture, de préférence du pavillon, et étant complétement limités par deux parties de paroi reliées ensemble par une bride de liaison (52), une partie de paroi étant constituée directement par l'élément de garniture (10) lui-même et l'autre partie par une partie séparée moulée (18), placée sur le côté arrière (14) de l'élément de garniture (10), caractérisée en ce que l'élément de garniture (10) est réalisé en multicouche et collé, tout en présentant une élasticité permanente, avec la partie moulée (18) en matière thermoplastique, et en ce que la structure de conduits d'air ainsi préparée peut être fixée à une paroi de carrosserie dans l'espace intérieur du véhicule.

2. Structure de conduits d'air suivant la revendication 1, caractérisée en ce que la partie moulée en thermoplastique (18) est en matière imperméable à l'air et à la vapeur, de préférence en acrylonitrile/butadiène/styrène (ABS), en ce que l'élément de garniture (10), sur le côté arrière, est enduit d'une feuille (20) imperméable à l'air et a la vapeur, de préférence en polyéthylène (PE), ou, au moins dans la zone des conduits d'air, porte une feuille supplémentaire imperméable à l'air et à la vapeur, et en ce qu'il comporte une couche de colle (22), présentant une élasticité permanente, reliant les parties de paroi, en matière étanche à l'air et résistant à la moisissure, de préférence un polyuréthanne se réticulant a l'humidité atmosphérique.

3. Structure de conduits d'air suivant la revendication 1 ou 2, caractérisée en ce que la partie moulée en thermoplastique (18) porte, à l'extérieur, un matelas isolant supplémentaire pour isolation acoustique et calorifuge qui est collé avec la partie moulée (18) et l'élément de garniture (10), et en ce qu'une couche d'isolation acoustique et calorifuge, du côté de l'élément de garniture (10), est formée par une âme porteuse (26) expansée, à l'intérieur de l'élément de garniture multicouche.

4. Structure de conduits d'air suivant une ou plusieurs des revendications 1 à 3, caractérisée en ce que les conduits d'air aboutissent à des ouies d'aération (28) qui sont ménagées dans l'élément de garniture (10).

5. Structure de conduits d'air suivant la revendication 4, caractérisée en ce que, étant donné la présence de plusieurs ouies d'aération (28) réparties dans l'espace, les conduits d'air (16) sont dérivés d'un conduit collectif commun (30) en conduits latéraux (32, 34), et en ce que les conduits d'air (16) présentent respectivement une section transversale qui correspond, en ce qui concerne les conduits latéraux (32, 34), à peu près à la section d ouverture des ouies d'aération (28) qui leur sont affectées et, en ce qui concerne les conduits collectifs (30), à peu près à la somme des sections des ouies d'aération (28) qui leur sont affectées.

6. Structure de conduits d'air suivant la revendication 5, caractérisée en ce que, dans les conduits collectifs (30), devant la dérivation des conduits latéraux (32, 34), sont placées des parois chicanes (36) qui sont formées en saillie sur la partie moulée en thermoplastique (18).

7. Structure de conduits d'air suivant la revendication 5 ou 6, caractérisée en ce que les conduits d'air (16) présentent des sections rectangulaires aplaties, de profondeur constante, et en ce que leur largeur est échelonnée suivant le nombre d'ouies d'aérations (28) qui leur sont affectées.

8. Structure de conduits d'air suivant la revendication 7, caractérisée en ce que la partie moulée en thermoplastique (18) présente un profilé en U qui est fermé par l'élément de garniture (10).

9. Structure de conduits d'air suivant la revendication 7, caractérisée en ce que, dans la zone des conduits d'air, l'élément de garniture (10) est moulé en U et fermé par une partie moulée en thermoplastique (18) plane.

10. Structure de conduits d'air suivant une ou plusieurs des revendications 4 à 9, caractérisée en ce que les ouies d'aération (28) sont disposées dans les parois (38) de moulures (40) ou de creux moulés de l'élément de garniture (10) et sont pourvues de buses de sortie obturables (42).

11. Structure de conduits d'air suivant une ou plusieurs des revendications 1 à 10, caractérisée en ce que la partie moulée en thermoplastique (18) consiste en plusieurs parties individuelles assemblées (44, 46) qui sont liées mutuellement par des embouts (48) du type manchon.

12. Structure de conduits d'air suivant une ou plusieurs des revendications 1 à 11, caractérisée en ce que, en plus de la couche de colle (22) présentant une élasticité permanente, sont prévus des points d'agrafage (50) en colle à prise rapide.

13. Structure de conduits d'air suivant une ou plusieurs des revendications 1 à 12, caractérisée en ce que la partie moulée en thermoplastique (18) sert d'écarteur pour fixation encliquetable avec la carrosserie du véhicule.

14. Procédé pour la fabrication d'une structure de conduits d'air suivant la revendication 1, caractérisé en ce que une partie moulée en thermoplastique est enduite, à sa bride de liaison, avec une colle à prise lente, présentant une élasticité permanente, en ce qu'ensuite la partie moulée est appliquée, prépositionnée, sur la face arrière d'un élément de garniture multicouche, puis positionnée et fixée dans trois axes.

15. Procédé suivant la revendication 14, caractérisé en ce que la forme moulée est fixée à l'élément de garniture en des points d'agrafage disposés le long de la bride de liaison.

16. Procédé suivant la revendication 15, caractérisé en ce que les points d'agrafage sont réalisés par une colle à prise rapide qui, sur des endroits marqués de la bride de liaison, est appliquée, avec une fixation mécanique temporaire, sur l'élément de garniture et la surface externe de la bride de liaison.
